Europäisches Patentamt

European Patent Office

Office européen des brevets

(11) Publication number: **0 124 622**
**B1**

(12) **EUROPEAN PATENT SPECIFICATION**

(45) Date of publication of patent specification: **30.01.91**

(21) Application number: **83903566.4**

(22) Date of filing: **10.11.83**

(86) International application number:
**PCT/JP83/00402**

(87) International publication number:
**WO 84/02010 24.05.84 Gazette 84/13**

(51) Int. Cl.⁵: **G 02 F 1/01, G 02 F 1/03, G 02 F 1/19**

(54) **LIGHT VALVE.**

(30) Priority: **11.11.82 JP 198688/82**

(43) Date of publication of application:
**14.11.84 Bulletin 84/46**

(45) Publication of the grant of the patent:
**30.01.91 Bulletin 91/05**

(84) Designated Contracting States:
**DE FR GB**

(56) References cited:
**JP-A- 565 525**
**JP-A-56 101 123**
**US-A-3 443 098**
**US-A-3 484 722**
**US-A-3 609 584**
**US-A-3 872 451**

**APPLIED OPTICS, vol. 12, no. 10, October 1973, pages 2309-2311, New York, US; R.A. KASHNOW et al.: "Total-reflection liquid-crystal electrooptic device"**

(73) Proprietor: **MATSUSHITA ELECTRIC INDUSTRIAL CO., LTD.**
**1006, Oaza Kadoma**
**Kadoma-shi, Osaka-fu, 571 (JP)**

(72) Inventor: **KITABATAKE, Makoto**
**10-104, Ikuno 4-chome Katano-shi**
**Osaka-fu 576 (JP)**
Inventor: **SETSUNE, Kentaro**
**24-9, Niwashirodai 4-cho Sakai-shi**
**Osaka-fu 590-01 (JP)**
Inventor: **WASA, Kiyotaka**
**7-27, Chiyogaoka 2-chome Nara-shi**
**Nara-ken 631 (JP)**

(74) Representative: **Patentanwälte Leinweber & Zimmermann**
**Rosental 7/II Aufg.**
**D-8000 München 2 (DE)**

Courier Press, Leamington Spa, England.

# EP 0 124 622 B1

(56) References cited:

APPLIED OPTICS, vol. 13, no. 8, August 1974, pages 1802-1806, New York, US; G. LABRUNIE et al.: "Nematic liquid crystal digital light deflector"

MESURES REGULATION AUTOMATISME, vol. 44, no. 10, October 1979, page 29, Paris, FR; "Un commutateur à cristal liquide pour fibres optiques"

IBM Technical Disclosure Bulletin, Vol. 22, No.5 October 1979, Page 2074

## Description

The present invention relates to an optical valve comprising a transparent prism having an input surface and an output surface for a beam of light, and a reflection control layer provided on the bottom surface of said prism, said reflection control layer having a thickness not smaller than the wavelength of the light beam and a refractive index smaller than the refractive index of the prism, said refractive index of the reflection control layer being controllable such that the beam of light is either totally reflected at the surface between the prism and the reflection control layer or transmitted through said layer.

Optical valves of this type may be utilized for switching on and off a laser beam or a white light beam. Thereby a high switching speed of several tens of MHz as for instance required in modern high-quality image processing may be obtained. This is in contrast to mechanical optical valves, such as a rotary chopper, rotary mirror or the like providing only a low switching speed in the order of several tens of kHz.

In a known optical valve of the above-referenced type (Applied Optics 12 (1973) pages 2309 to 2311) a light ray entering the prism through the light input surface impinges on the control layer having a refractive index greater than the refractive index of the prism and is thus reflected back from the control layer into the interior of the prism by total reflection in order to leave the prism at the light output surface opposite to the light input surface. The control layer consists of a layer of liquid crystal having transparent electrodes applied to both surfaces. By the application of a suitable electric control signal to the electrodes the refractive index of the liquid crystal layer becomes higher than the one of the prism and the light beam is no longer reflected but transmitted through the liquid crystal layer. In order to decrease the proportion of light reflection of the transmitted light on the outer surface of the liquid crystal layer, another prism is arranged on the outer surface of the liquid crystal layer in symmetric relationship to the prism having the light input surface for the light ray so that the transmitted light ray leaves the further prism at an output surface thereof. Similar optical valve arrangements are disclosed in Applied Optics 13 (1974), pages 1802 to 1806, Mesures Régulation Automatisme 44 (1979), page 29 and US—A—3 872 451. A lens being made of a material which changes the refractive index by the applicaton of heat thereto is disclosed in US—A—3 609 584.

It is an object of the present invention to further increase the switching efficiency of the optical valve by further suppression of an amount of reflected light in the light ray transmitted through the control layer.

In order to attain this object the invention is characterized in that the outer surface of said reflective control layer is roughened so that total reflection of the light beam on said outer surface, which would otherwise occur, is avoided.

Exemplary embodiments of the invention are now described with reference to the drawings in which:

Fig. 1 is a sectional view showing a basic arrangement of an optical valve in accordance with the invention;

Fig. 2 is a sectional view showing an essential part of an embodiment of the optical valve in accordance with the invention; and

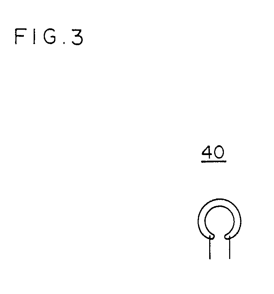

Fig. 3 is a plan view of a heat generating member used in conjunction with a reflective control layer made of a heat-sensitive optical material.

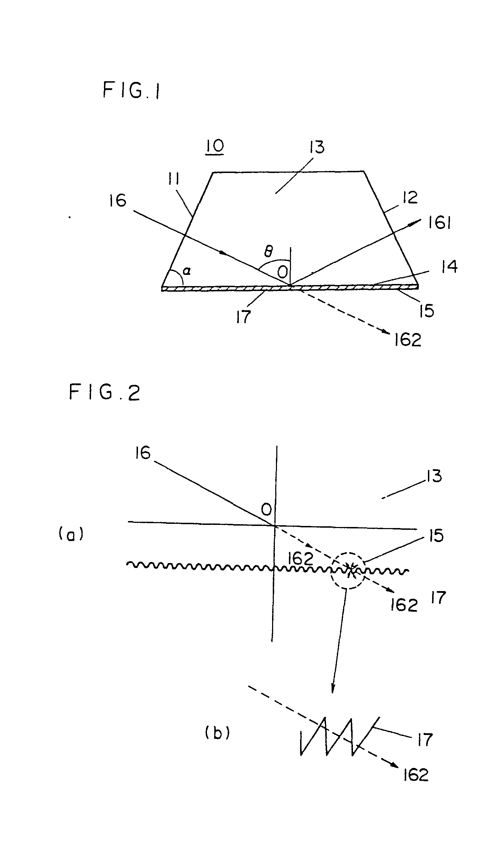

Referring first to Fig. 1 showing the basic arrangement of an optical valve in accordance with the invention, the optical valve 10 including a transparent prism 13 having a light input surface 11 and a light output surface 12, is characterized by a reflective control layer 15 provided on the bottom surface 14 of the prism 13. The refractive index of the prism 13 is selected to be greater than that of the reflective control layer 15. A light beam 16 is applied to the prism 13 at an incidence angle θ, toward the central point O of the bottom surface through the light input surface 11. If the angle θ of incidence is greater than the total reflection critical angle which is determined by the prism 13 and the reflective control layer 15, the incident light is totally reflected on the central point O of the bottom surface of the prism 13 and is emitted through the output surface 12 as the reflected light 161. Namely, by selecting an incident angle θ which is slightly smaller than the critical angle mentioned above, the incident light 16 passes through the central point O of the bottom surface and is emitted through the bottom surface 14 of the prism as the transmitted light 162, because the condition for total reflection is not met in this case. If, however, the refractive index of the reflective control layer 15 is decreased by, for example, an externally supplied electric signal, the above-mentioned condition for total reflection is satisfied so that the incident light is totally reflected and emitted as the reflected light 161. Obviously, the same incident light can be emitted as the transmitted light 162 by increasing the refractive index of the reflective control layer 15 by the electric signal. Thus, the prism 13 serves as an optical switch for switching the incident light either to the reflected light 161 or the transmitted light 162.

When using a thin film of an electro-optical material having a film thickness not smaller than the wavelength of the incident light 16 and by applying an electric field as the electric signal around the central point O of the reflective control layer 15, it is possible to decrease the refractive index around the central point O thereby attaining a valve function for switching the light. Examples of the electro-optical material are materials of $ABO_3$ type, such as $LiNbO_3$, $LiTaO_3$, PLZT[(Pb, La)(Zr, Ti)$O_3$], PBZT[(PB, Ba) (Zr, Ti)$O_3$], PSZT[(Pb(Sn, Zr, Ti)$O_3$], KTN[K(Ta, Nb)$O_3$], and SBN[(Sr, Ba)$Nb_2O_6$]. The application of the electric field is made by, for example, applying a voltage between a pair of parallel electrodes on the outer surface 17 of the reflective control layer 15 at both sides of the central point O.

The use of the material having $ABO_3$ type structure as the material of the thin film of electro-optical material is not exclusive and other types of structure can be used provided that a sufficiently large change of the refractive index, e.g. $10^{-1}$ to $10^{-2}$, is caused by the application of the electric field.

By using a thin film of a heat-sensitive optical material having a thickness of not smaller than the wavelength of the incident light 16 and by applying heat to the portion of the prism around the central point O of the reflective control layer 15, it is possible to increase the refractive index in the portion of the prism around the central point O so as to provide an optical valve function for switching the light. The photosensitive optical material is a material the refractive index of which is widely changed in response to heat. Examples of such heat-sensitive optical material are: $ABO_3$ type compounds such as $LiNBO_3$, $liTaO_3$, PLZT, PBZT, PSZT, KTN and SBN; sillenite compounds such as $BGO(Bi_{12}GeO_{20})$, $BSO(Bi_{12}SiO_{20})$ and the like; and transition metal compounds such as $TiO_2$, $Nb_2O_5$ and so forth. The application of heat can be carried out by providing a heat generating member in the form of a thin film of electric resistor, e.g., a thin film of nickel-chromium resistor, on the outer surface of the reflective control layer 15 around the central point O and supplying electric current as the electric signal to the resistor. A good result is obtained by using a horse-shoe shaped heat generating member (40) as shown in Fig. 4 and supplying an electric current thereto by applying a voltage between both ends thereof. If the thin film of heat-sensitive optical material has a low electrical insulation power, the heat may be applied by supplying the electric current directly to the thin film of heat-sensitive optical material, through a pair of parallel electrodes attached to the outer surface of the heat-sensitive optical material at both sides of the central point O, instead of providing the heat generating body in the form of the thin film of electric resistor. In this case, the heat is generated directly in the thin film of the heat-sensitive optical material by the electric current directly supplied thereto.

In the optical valve 10 shown in Fig. 1, if the surface 17 of the reflective control layer 15 is smooth, the light impinging upon the central point O, which is to be emitted therefrom as the transmitted light 162, is totally reflected by the surface 17 to come again into the prism 13. The light then runs through the prism in a side-by-side relation to the reflected light 161, so that the extinction ratio of the optical valve 10 is impaired disadvantageously. According to the invention, therefore, the outer surface 17 is roughened as shown in Fig. 2a to ensure that a large part of the light 162 is emitted to the outside of the prism, thereby preventing the total reflection of the light. Preferably, the roughened surface has saw-tooth shaped stripes as shown in Fig. 2b arranged such that the longitudinal axis of each stripe extends at a right angle to the direction of the transmitted light 162. With such a roughened surface, the light 162 can be effectively emitted to the outside of the prism so that the property of the optical valve, e.g., the extinction ratio is very much improved.

The inventors have confirmed also that the light intensity can be increased and a higher switching performance can be obtained by forming non-reflective coating layers on the light input surface 11 and the light output surface 12 of the prism 13.

A material transparent to the light ray to be switched and having a high refractive index should be used as the material of the prism 13. For instance, rutile ($TiO_2$) and GaP are suitably used for switching visible rays and infraed rays, respectively.

The thin film of electro-optical material constituting the reflective control layer can have a monocrystalline structure or a polycrystalline structure. In contrast, the thin film of heat-sensitive optical material need not always have a crystalline structure: namely, an amorphous structure may be used for this purpose. For instance, a thin film of $LiNbO_3$ having an amorph-ous structure exhibits a drastic change of refractive index in response to the heat. The amount of the change in refractive index of this amorphous material is more than $10^1$ times as large as that of the single crystal of $LiNbO_3$.

Reference Example 1

A practical example of the optical valve of the invention will be explained hereinunder with reference to Fig. 1. In this example, rutile having a refractive index of 2.6 is used as the material of the prism 13. The angle a formed between each side surface and the bottom surface of the prism 13 is 61°. A thin film 15 of amorphous $LiNbO_3$, having a thickness of 1 μm and a refractive index of 2.25, is formed as the reflective control layer by sputtering on the bottom surface 14 of the prism 13. The outer surface 17 of the thin film is roughened by #800 grain abrasive and a thin film of nickel-chromium alloy is formed on the roughened surface by evaporation. A He-Ne laser beam 16 is applied through the light input surface 11 of the prism 13 at a right angle to this surface 11. The critical reflection angle at the boundary 14 between the prism 13 and the thin film 15 of $LiNbO_3$ is 59.5°, so that the laser beam 16 is totally reflected because the angle of incidence is 61°. However, as electric power is supplied to the thin film of nickel-chromium alloy, the refractive index of the thin film of $LiNbO_3$ is increased to 2.3 dus to the heat generated in the nickel-chromium alloy. Consequently, the reflective critical angle is increased to 62.2° so that the laser beam having the incidence angle of 61° is never reflected totally by the boundary 14. The original refractive index is resumed as the power supply to the thin film 15 of nickel-chromium alloy is switched off, so that the laser beam is totally reflected again. This optical valve showed an intensity ratio of 1.0:0.1;

namely, while the intensity in the "on" state of the valve is 1.0, the intensity in the "off" state was 0.1. This exmple showed quite a short switching time length of several microseconds.

The optical valve of the invention is capable of switching a light at a high speed and can function as a valve for all kinds of light including laser beam and white light. This optical valve, therefore, finds various uses as optical parts such as switches and modulators for optical communication, as well as parts of various equipment which makes use of light such as projection-type televisions and the like.

List of reference numerals in drawing
    10—Optical valve.
    11—Light input surface.
    12—Light output surface.
    13—Prism.
    14—Bottom surface of prism 13.
    15—Reflective control layer.
    16—Incident light.
    17—Outer surface of reflective control layer 15
    30—Optical valve.
    32—Prism.
    33—Light output surface.
    40—Heat generating member.
    161—Reflected light.
    162—Transmitted light.

## Claims

1. An optical valve comprising a transparent prism (13) having an input surface (11) and an output surface (12) for a beam of light, and a reflection control layer (15) provided on the bottom surface (14) of said prism (13), said reflection control layer (15) having a thickness not smaller than the wavelength of the light beam and a refractive index smaller than the refractive index of the prism (13), said refractive index of the reflection control layer being controllable such that the beam of light is either totally reflected at the surface between the prism (13) and the reflection control layer (15) or transmitted through said layer, characterized in that the outer surface (17) of said reflective control layer (15) is roughened so that total reflection of the light beam on said outer surface, which would otherwise occur, is avoided.

2. An optical valve according to claim 1, wherein said reflection control layer (15) is constitued by a film of an electro-optical material.

3. An optical valve according to claim 1, wherein said reflection control layer (15) is constituted by a thin film of a heat-sensitive optical material.

4. An optical valve according to any one of claims 1 to 3, wherein the input and output surfaces (11; 12) of said prism (13) are coated with a non-reflective coat.

5. an optical valve according to claim 2, wherein said electro-optical material has an $ABO_3$ type structure.

6. An optical valve according to claim 3, wherein said heat-sensitive optical material is composed of at least one selected from a group consisting of $ABO_3$ type compounds, sillenite compounds, and oxides of transition metals.

7. An optical valve according to claim 3, wherein the reflection control layer (15) made of heat-sensitive optical material has an appreciable electric conductivity, and electrodes are directly adhered to said reflection control layer (15).

8. An optical valve according to claim 3, wherein a thin film of a nickel-chromium alloy as a heat generating member is attached to said reflection control layer (15) made of thin film of heat-sensitive optical material.

9. An optical valve according to claim 3, wherein a heat generating member (40) in the form of a horse-shoe shaped thin film is attached to said reflection control layer (15) made of heat-sensitive optical material.

10. An optical valve according to claim 5 or 6, wherein one selected from a group consisting of $LiNbO_3$, $LiTaO_3$, PLZT, PBZT, KTN and SBN is used as said $ABO_3$ type compound.

11. An optical valve according to claim 3, wherein said heat-sensitive optical material is one selected from a group consisting of BGO, BSO, $TiO_2$ and $Nb_2O_5$.

12. An optical valve according to claim 1, wherein said prism (13) is made of rutile or GaP.

## Patentansprüche

1. Optisches Ventil mit einem transparenten Prisma (13), das eine Eintrittsfläche (11) und eine Austrittsfläche (12) für einen Lichtstrahl aufweist sowie eine auf der Bodenfläche (14) des Prismas (13) vorgesehene Reflexionssteuerschicht (15), deren Dicke nicht kleiner ist als die Wellenlänge des Lichtstrahls und deren Brechungsindex kleiner ist als der Brechungsindex des Prismas (13), wobei der Brechungsindex der Reflexionssteuerschicht derart steuerbar ist, daß der Lichtstrahl entweder an der Oberfläche zwischen dem Prisma (13) und der Reflexionssteuerschicht (15) totalreflektiert wird oder durch die Schicht durchgelassen wird, dadurch gekenzeichnet, daß die Außenfläche (17) der Reflexionssteuerschicht (15) aufgerauht ist, so daß die andernfalls an der Außenfläche auftretende Totalreflexion des Lichtstrahls unterdrückt ist.

2. Optisches Ventil nach Anspruch 1, bei dem die Reflexionssteuerschicht (15) durch einen Film aus einem elektro-optischen material gebildet ist.

3. Optisches Ventil nach Anspruch 1, bei dem die Reflexionssteuerschicht (15) durch einen Dünnfilm eines wärmesensitiven optischen Materials gebildet ist.

4. Optisches Ventil nach einem der Ansprüche 1 bis 3, bei dem die Eintritts- und Austrittsflächen (11; 12) des Prismas (13) mit einem nichtreflektierenden Überzug beschichtet sind.

5. Optisches Ventil nach Anspruch 3, bei dem die Struktur des elektrooptischen Materials vom $ABO_3$-Typ ist.

6. Optisches Ventil nach Anspruch 3, bei dem das wärmesensitive optische Material aus wenigstens einem aus einer aus Verbindungen vom ABO$_3$-Typ, Sillenit-Verbindungen und Oxiden von Übergangsmetallen bestehenden Gruppe ausgewählten Werkstoff zusammengesetzt ist.

7. Optisches Ventil nach Anspruch 3, bei dem die aus einem wärmesensitiven optischen Material hergestellte Reflexionssteuerschicht (15) eine nennenswerte elektrische Leitfähigkeit aufweist und Elektroden unmittelbar an die Reflexionssteuerschicht (15) angesetzt sind.

8. Optisches Ventil nach Anspruch 3, bei dem ein Dünnfilm aus einer Nickel-Chrom-Legierung als ein wärmeerzeugendes Teil an die aus einem Dünnfilm eines wärmesensitiven optischen Materials hergestellte Reflexionssteuerschicht (15) angesetzt ist.

9. Optisches Ventil nach Anspruch 3, bei dem ein wärmeerzeugendes Teil (40) in der Form eines hufeisenförmigen Dünnfilms an die aus einem wärmesensitiven optischen Material hergestellt Reflexionssteuerschicht (15) angesetzt ist.

10. Optisches Ventil nach Anspruch 5 oder 6, bei dem als die Verbindung vom ABO$_3$-Typ ein aus einer aus LiNbO$_3$, LiTaO$_3$, PLZT, PBZT, KTN und SBN bestehenden Gruppe gewähltes Mitglied verwendet ist.

11. Optisches Ventil nach Anspruch 3, bei dem das wärmesensitive optische Material ein aus einer aus BGO, BSO, TiO$_2$ und Nb$_2$O$_5$ bestehenden Gruppe gewähltes Mitglied ist.

12. Optisches Ventil nach Anspruch 1, bei dem das Prisma (13) aus Rutil oder GaP hergestellt ist.

**Revendications**

1. Commutateur optique, comprenant un prisme transparent (13) qui présente une surface d'entrée (11) et une surface de sortie (12) pour un faisceau lumineux, et une couche de commande de réflexion (15) appliquée sur la surface de base (14) dudit prisme (13), cette couche de commande de réflexion (15) ayant une épaisseur non inférieure à la longueur d'onde du faisceau lumineux et un indice de réfraction inférieur à l'indice de réfraction du prisme (13), ledit indice de réfraction de la couche de commande de réflexion pouvant être commandé de telle sorte que le faisceau lumineux soit totalement réfléchi au niveau de la surface entre le prisme (13) et la couche de commande de réflexion (15), ou soit transmis à travers ladite couche, caractérisé en ce que la surface extérieure (17) de ladite couche de commande de réflexion (15) est rendue rugueuse, de manière à éviter la réflexion totale du faisceau lumineux qui se produirait autrement sur ladite surface extérieure.

2. Commutateur optique selon la revendication 1, dans lequel ladite couche de commande de réflexion (15) est constituée par un film d'une matière électro-optique.

3. Commutateur optique selon la revendication 1, dans lequel ladite couche de commande de réflexion (15) est constituée par un film mince d'une matière optique thermosensible.

4. Commutateur optique selon l'une quelconque des revendications 1 à 3, dans lequel les surfaces d'entrée et de sortie (11, 12) dudit prisme (13) sont garnies d'un revêtement non réfléchissant.

5. Commutateur optique selon la revendication 2, dans lequel ladite matière électro-optique a une structure du type ABO$_3$.

6. Commutateur optique selon la revendication 3, dans lequel ladite matière optique thermosensible est composée d'au moins un composé choisi dans un groupe constitué par des composés du type ABO$_3$, des dérivés de sillénite et des oxydes de métaux de transition.

7. Commutateur optique selon la revendication 3, dans lequel la couche de commande de réflexion (15) faite de matière optique thermosensible a une conductivité électrique appréciable, et en ce que des électrodes sont directement collées sur ladite couche de commande de réflexion (15).

8. Commutateur optique selon la revendication 3, dans lequel un film mince d'un alliage nickel-chrome est fixé, en tant qu'élément générateur de chaleur, à ladite couche de commande de réflexion (15) faite d'un film mince de matière optique thermosensible.

9. Commutateur optique selon la revendication 3, dans lequel un élément générateur de chaleur (40), sous la forme d'un fil mince en fer à cheval, est fixé à ladite couche de commande de réflexion (15) faite de matière optique thermosensible.

10. Commutateur optique selon la revendication 5 ou 6, dans lequel un composé choisi dans un groupe constitué par LiNbO$_3$, LiTaO$_3$, PLZT, PBZT, KTN et SBN est utilisé comme composé du type ABO$_3$.

11. Commutateur optique selon la revendication 3, dans lequel ladite matière optique thermosensible est une matière choisie dans un groupe constitué par BGO, BSO, TiO$_2$ et Nb$_2$O$_5$.

12. Commutateur optique selon la revendication 1, dans lequel ledit prisme (13) est fait de rutile ou de GaP.

FIG.1

FIG.2

(a)

(b)

FIG.3

<u>40</u>